# EUROPEAN PATENT SPECIFICATION

(11) **EP 2 693 644 B1**
(45) Date of publication and mention of the grant of the patent: **03.12.2014**
(21) Application number: 12179253.5
(22) Date of filing: 03.08.2012
(51) Int. Cl.: H04B 1/00

(54) **Mobile wireless communications device with lna front end circuit and related methods**
Mobile drahtlose Kommunikationsvorrichtung mit LNA-Eingangsschaltung und zugehörige Verfahren
Dispositif mobile de communications sans fil doté d'un circuit frontal LNA et procédés apparentés

(43) Date of publication of application: 05.02.2014
(73) Proprietor: BlackBerry Limited, Waterloo, ON N2K 0A7 (CA)
(72) Inventor: George, Liviu, Waterloo, Ontario N2L 3W8 (CA); Hughes, Simon Andrew, Waterloo, Ontario N2L 3W8 (CA); Little, Christopher Robert, Waterloo, Ontario N2L 3W8 (CA); Manku, Tajinder, Waterloo, Ontario N2L 3W8 (CA)
(74) Representative: Bryn-Jacobsen, Caelia

(56) References cited:
- EP-A1- 1 381 163
- EP-A1- 2 372 844

## Description

### Technical Field

This application relates to the field of communications, and more particularly, to mobile wireless communications devices and related methods.

### Background

Cellular communication systems continue to grow in popularity and have become an integral part of both personal and business communications. Document EP1381163 Al discloses a multiband RF receiver. Cellular telephones allow users to place and receive phone calls almost anywhere they travel. Moreover, as cellular telephone technology is advanced, so too has the functionality of cellular devices. For example, many cellular devices now incorporate Personal Digital Assistant (PDA) features such as calendars, address books, task lists, calculators, memo and writing programs, etc. These multifunction devices usually allow users to wirelessly send and receive electronic mail (email) messages and access the internet via a cellular network and/or a wireless local area network (WLAN), for example.

Cellular devices have radio frequency (RF) processing circuits and receive or transmit radio communications signals typically using modulation schemes. The typical cellular device may have multiple transmit and receive pathways from the antenna to a digital signal processor (DSP). In particular, each signal pathway may comprise a filter to help isolate the desired frequency band from extraneous electromagnetic signals, for example, noise and interference. Nevertheless, as frequency bands change because of regulatory reasons, expansion, etc. and as more transceivers are added to the cellular device, the likelihood of self-interference may increase.

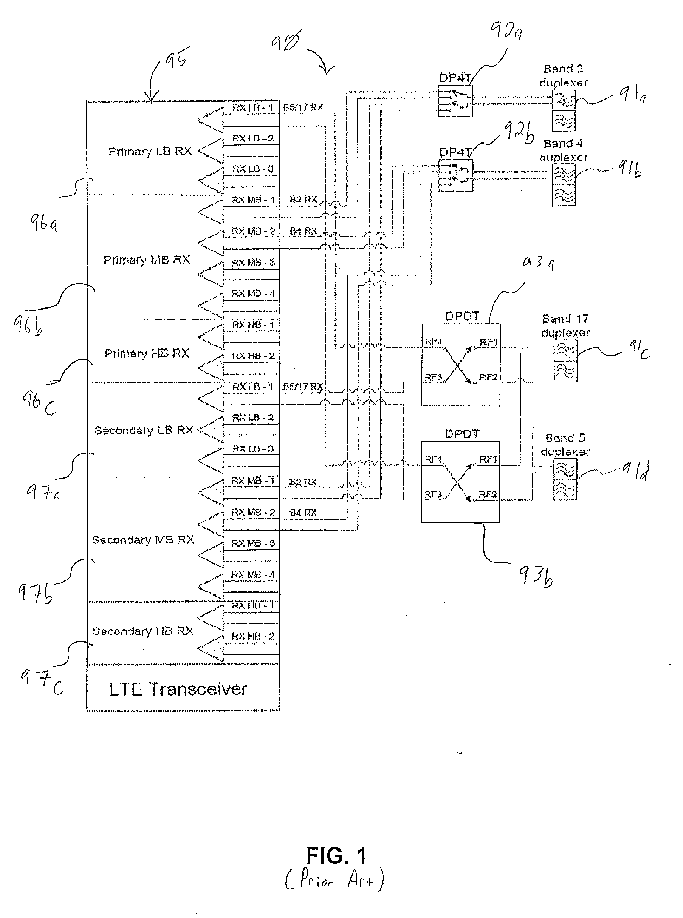

The routing of the pathways from the antenna to the DSP in a fourth generation Long Term Evolution (LTE) device may be problematic, particularly, the RF performance demands in carrier aggregation mode. Referring to FIG. 1, an approach to a receiver device **90** is shown. The receiver device **90** illustratively includes an LTE transceiver **95** comprising a plurality of primary and secondary receivers **96a-96c, 97a-97c.** The receiver device **90** illustratively includes a plurality of band pass duplexers **91a-91d** for passing the respective bands of the LTE communication standard. The receiver device **90** illustratively includes a pair of double-pole, four throw switches **92a-92b** coupled between the band pass duplexers **91a-91b** and the LTE transceiver **95,** and a pair of double-pole, double-throw switches **93a-93b** coupled between the band pass duplexers **91c-91d** and the LTE transceiver **95.** A potential drawback of this approach is that the front end module of the receiver device **90** is complicated, which adds to difficulty and cost of manufacture. Moreover, as more band capabilities are added, the complexity also increases.

### Brief Description of the Drawings

FIG. 1 is a schematic block diagram of a mobile wireless communications device, according to the prior art.
FIG. 2 is a schematic block diagram of an example embodiment of a mobile wireless communications device.
FIG. 3 is a detailed schematic block diagram of the front end circuit of the mobile wireless communications device of FIG. 2.
FIG. 4 is a schematic block diagram illustrating example components of a mobile wireless communications device that may be used with the mobile wireless communications device of FIG. 2.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout. The invention is defined in the claims.

Generally speaking, a mobile wireless communications device may include an antenna, a plurality of LTE RF differential inputs, and a front end circuit. The front end circuit may comprise a plurality of band pass filters coupled to the antenna, a plurality of LNAs coupled respectively to the plurality of band pass filters, and a plurality of RF switching circuits, each RF switching circuit respectively coupled between each LNA and a pair of LTE RF differential inputs and configured to switch to one or both of the pair of LTE RF differential inputs. Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

The plurality of LTE RF differential inputs may comprise a group of low band LTE RF differential inputs, a group of mid band LTE RF differential inputs, and a group of high band LTE RF differential inputs. The mobile wireless communications device may further comprise a controller configured to operate the plurality of RF switching circuits in a carrier aggregation mode. For example, the controller may be configured to operate based upon a Mobile Industry Processor Interface (MIPI).

More specifically, the front end circuit may comprise a plurality of RF splitters respectively coupled between the plurality of LNAs and the plurality of RF switching circuits. Each RF switching circuit may comprise a pair of single-pole, double-throw (SPDT) switches coupled to a respective one of the plurality of RF splitters.

In some embodiments, the front end circuit may comprise a plurality thereof including a low band front end circuit, a mid band front end circuit, and a high band front end circuit. The front end circuit may comprise a plurality of RF baluns respectively coupled to the plurality of RF switching circuits. The mobile wireless communications device may further comprise a housing containing the antenna, the plurality of LTE RF differential inputs, and the front end circuit.

Another aspect is directed to a method of making a mobile wireless communications device. The method may comprise coupling a front end circuit between a plurality of LTE RF differential inputs and an antenna. The front end circuit may comprise a plurality of band pass filters coupled to the antenna, a plurality of LNAs coupled respectively to the plurality of band pass filters, and a plurality of RF switching circuits. Each RF switching circuit may be respectively coupled between each LNA and a pair of LTE RF differential inputs and configured to switch to one or both of the pair of LTE RF differential inputs.

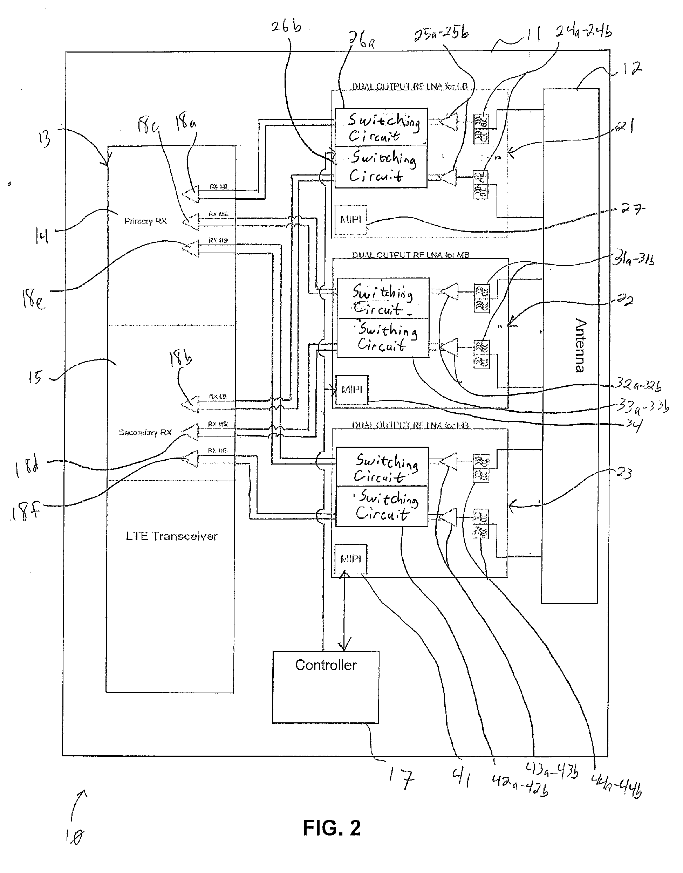

Referring now to FIG. 2, a mobile wireless communications device **10** according to the present disclosure is now described. The mobile wireless communications device **10** illustratively includes an antenna **12,** and an LTE transceiver **13** coupled to the antenna. The LTE transceiver **13** illustratively includes a plurality of LTE RF receivers **14-15** (i.e. primary **14,** and secondary **15** receivers). The LTE RF receivers **14-15** comprise a group of low band LTE RF differential inputs **18a-18b,** a group of mid band LTE RF differential inputs **18c-18d,** and a group of high band LTE RF differential inputs **18e-18f.**

The mobile wireless communications device **10** illustratively includes a plurality front end circuits **21-23.** The front end circuits **21-23** comprise a low band front end circuit **21,** a mid band front end circuit **22,** and a high band front end circuit **23.** The front end circuits **21-23** are coupled respectively to the group of low band LTE RF differential inputs **18a-18b,** the group of mid band LTE RF differential inputs **18c-18d,** and the group of high band LTE RF differential inputs **18e-18f.**

Each front end circuit **21-23** comprises a plurality of band pass filters (e.g. illustrated as band pass filter duplexers) **24a-24b, 31a-31b, & 44a-44b** coupled to the antenna **12,** a plurality of LNAs **25a-25b, 32a-32b, & 43a-43b** coupled respectively to the plurality of band pass filters, and a plurality of RF switching circuits **26a-26b, 33a-33b, & 42a-42b.** Each RF switching circuit **26a-26b, 33a-33b, & 42a-42b** is respectively coupled between each LNA **25a-25b, 32a-32b, & 43a-43b** and a pair of LTE RF differential inputs. Additionally, each RF switching circuit **26a-26b, 33a-33b, & 42a-42b** is configured to switch to one or both of the pair of LTE RF inputs **18a-18b, 18c-18d, 18e-18f.**

In the illustrated embodiment, the mobile wireless communications device **10** illustratively includes a controller **17** configured to operate the plurality of RF switching circuits **26a-26b, 33a-33b, & 42a-42b** in a carrier aggregation mode. The controller **17** is configured to operate based upon a MIPI standard. In particular, in the illustrated embodiment, each front end circuit **21-23** comprises a MIPI module **27, 34, 41** for controlling the components therein. The mobile wireless communications device **10** illustratively includes a housing **11** containing the antenna **12,** the LTE transceiver **13,** the front end circuits **21-23,** and the controller **17.**

For simplicity, the illustrated embodiment of the mobile wireless communications device **10** only includes the main and secondary LTE receivers (LTE RF receivers **14-15).** As will be appreciated, the mobile wireless communications device **10** could additionally include the other receivers, such as a multiple input multiple output (MIMO) receiver or a diversity receiver, but the respective front end circuits for these receivers may include either duplexers or filters, depending on the application. The LTE transceiver **13** inputs can be tuned for LB, MB, or HB, but given relaxed noise figure specifications, they can be wide bandwidth. If wide bandwidth LNAs are chosen, depending on the configuration, fewer than 12 RX inputs can be used.

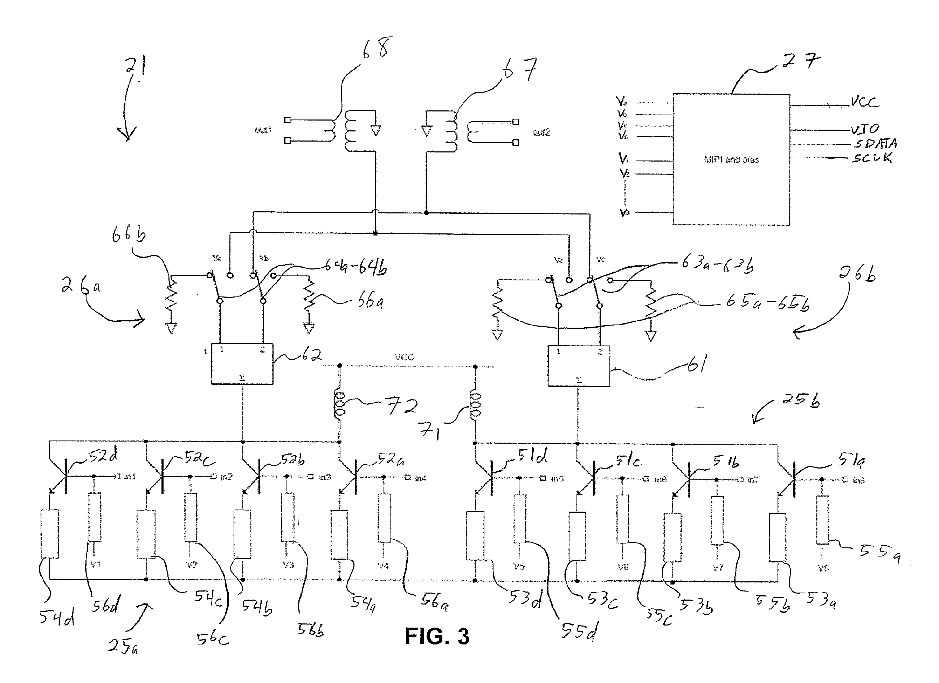

Referring now additionally to FIG. 3, the low band front end circuit **21** is now described in more detail. As will be appreciated, the mid band front end circuit **22,** and the high band front end circuit **23** may each be similarly constituted. In the illustrated embodiment, the front end circuits **21-23** are used for one band set each (LB or MB or HB). In these embodiments, the other modules **22-23** can have the splitter + switch circuit bypassed by a 3dB (actually, 3dB plus the RF switch loss) attenuator. In some cases (like HB bands), more switches can be added to accommodate TDD bands and/or other special requirements.

More specifically, in the low band front end circuit **21,** each LNA **25a-25b** illustratively includes a bank of 4 BJT LNAs **51a-51d, 52a-52d,** a bias resistor **55a-55d, 56a-56d** coupled respectively to the base terminals, and a second resistor **53a-53d, 54a-54d** coupled respectively to the emitter terminal. The collector terminals of the BJT LNAs **51a-51d, 52a-52d** are coupled commonly to a power source VCC via a pair of inductors **71-72.**

In each block of four BJT LNAs **51a-51d, 52a-52d,** in some embodiments, a maximum of one BJT LNA would be active at any particular time. The LNA block design may use external compensation for the unwanted loading of the three BJT LNAs **51a-51d, 52a-52d** that are turned off while one of them is active. This can be achieved with some inductive load or by LNA output matching.

The low band front end circuit **21** illustratively includes a plurality of RF splitters **61-62** respectively coupled between the plurality of LNAs **25a-25b** and the plurality of RF switching circuits **26a-26b.** Each RF switching circuit **26a-26b** illustratively includes a pair of SPDT switches **63a-63b, 64a-64b** coupled to a respective one of the plurality of RF splitters **61, 62,** and a pair of 50 Ω termination resistors **65a-65b, 66a-66b.** The low band front end circuit **21** illustratively includes a plurality of RF baluns **67-68** respectively coupled to the RF switching circuits **26a-26b.**

The SPDT switches **63a-63b, 64a-64b** feed the RF baluns **67-68,** depending on the selection made. This scheme allows any BJT LNA **51a-51d, 52a-52d** from a block of four to drive either output or both. When the selected BJT LNA **51a-51d, 52a-52d** drives only one output, the other RF splitter **61-62** port is terminated to the 50 Ω resistor **65a-66b,** thus keeping the RF splitter properly terminated and preserving the overall LNA + splitter + switch + balun gain constant. When one particular LNA **25a-25b**/switching circuit **26a-26b** drives both outputs (out 1 and out2), the other splitter's outputs are terminated to 50Ω resistor **65a-66b** (that LNA block of four BJT LNAs connected to this splitter is inactive). In the illustrated example, the RF baluns **67-68** and the RF splitters **61-62** are designed to cover only LB or MB or HB. The LNAs **25a-25b** integrated circuit (IC) die can be designed to cover all LB and MB and HB bands. On-module RF matching components tune each LNA **25a-25b** input to each 2G/3G/LTE band and input duplexer/filter. The outputs shall be tuned to LB, MB or HB set of bands respectively. The MIPI modules **27, 34, 41** and control circuits may be on a separate IC die. The LNA IC die may have its own bias circuitry logically controlled by the MIPI module **27, 34, 41.** The switching circuits **26a-26b** are also controlled by MIPI module **27.**

Another aspect is directed to a method of making a mobile wireless communications device **10.** The method may comprise coupling a front end circuit **21-23** between a plurality of LTE RF differential inputs **18a-18f** and an antenna **12.** The front end circuit **21-23** may comprise a plurality of band pass filters **24a-24b, 31a-31b, & 44a-44b** coupled to the antenna **12,** a plurality of LNAs **25a-25b, 32a-32b, & 43a-43b** coupled respectively to the plurality of band pass filters, and a plurality of RF switching circuits **26a-26b, 33a-33b, & 42a-42b,** each RF switching circuit respectively coupled between each LNA and a pair of LTE RF differential inputs and configured to switch to one or both of the pair of LTE RF differential inputs **18a-18f.**

Advantageously, the mobile wireless communications device **10** described herein may provide an approach to issues in the rollout of new LTE Release 10, which may require simultaneous receiving on different frequency bands (carrier aggregation) and may create challenges for user equipment (UE) RF design. For example, one of the issues is the simultaneous receiving in low band + mid band while being able to receive a low band + high band and mid band + high band combination (low band stands for any of the LTE Bands 5, 8, 12, 13, 17, 20, mid band for LTE Bands 1,2,3,4, and high band for LTE band 7), as in European 20+3, 20+7 and 3+7 band combinations. Two receivers can accommodate 20+7 and 20+3, but there may be a need for special internal or external switching circuitry if the receiver accommodates bands 3+7 on the same receiver. If an internal switch is not available or if the Release 10 approach involves two separate RF integrated circuits (ICs) with differential receiver inputs, there may be an issue with switching signals between the two inputs/RF ICs. These band combinations are listed herein: LTE FDD: 17+2, 17+4, 13+4, MediaFLO+2, 3+7, 20+7, 20+3, 3+5; and 3G: 8+1, 5+1, 5+2, 2+4.

New band combinations are possible, such as low band + low band and other low band + mid band and low band + high band. In the case of noncontiguous intra-band carrier aggregation, where the two carriers are more than 20 MHz apart, the application may need to feed both receivers with the same signal, with one receiver locked on one carrier while the other receives the second carrier. This may require the output of the LNA to be split while keeping the gain reasonable close to the single receiver case.

The core of the issue is that a flexible receiver front end will not only help with achieving excellent performance, but would allow a greater flexibility to accommodate such changes in near and distant future. The RF designer would only have to customize external modules, a faster and lower cost alternative to re-spinning the RF IC.

Advantageously, the front end circuit **21-23** disclosed herein provides an approach to the problems outlined above by moving part of the RF IC internal LNAs into a front-end circuit that includes duplexers, filters, and RF switches, all of these being controlled by the MIPI interface, thus reducing the number of pins in these modules. The mobile wireless communications device **10** includes three types of front end circuits **21-23:** low band, mid band and high band, each having different internal structure and using the same LNA die, only tuned to the respective band frequency.

The mobile wireless communications device **10** architecture proposed may provide the following advantages: 1) band coverage for all 2G/3G/LTE bands and band combinations for carrier aggregation (Releases 10 and up); 2) support of 3 carrier aggregation band combinations into 2 receivers with post-LNA dual-throw switches; this provides no reduction in performance, low component count and good integration, unlike known solutions; 3) minimum noise figure for the receiver chain, by having no additional RF switches between the LNA input and the RF main switch; 4) lower current consumption, compare to on-chip LNAs; 5) better noise immunity since the LNA is external to the RF IC die and has better isolation between the on-chip noise generating circuits and LNA inputs; 6) easier to design front-end circuit since there are only three differential inputs per receiver, with a total of 12 for the whole RF IC. This dramatically reduces the number of RX traces, from more than 60 to 24; and 7) flexibility for future requirements, no RF IC respin needed to accommodate new bands and band combinations.

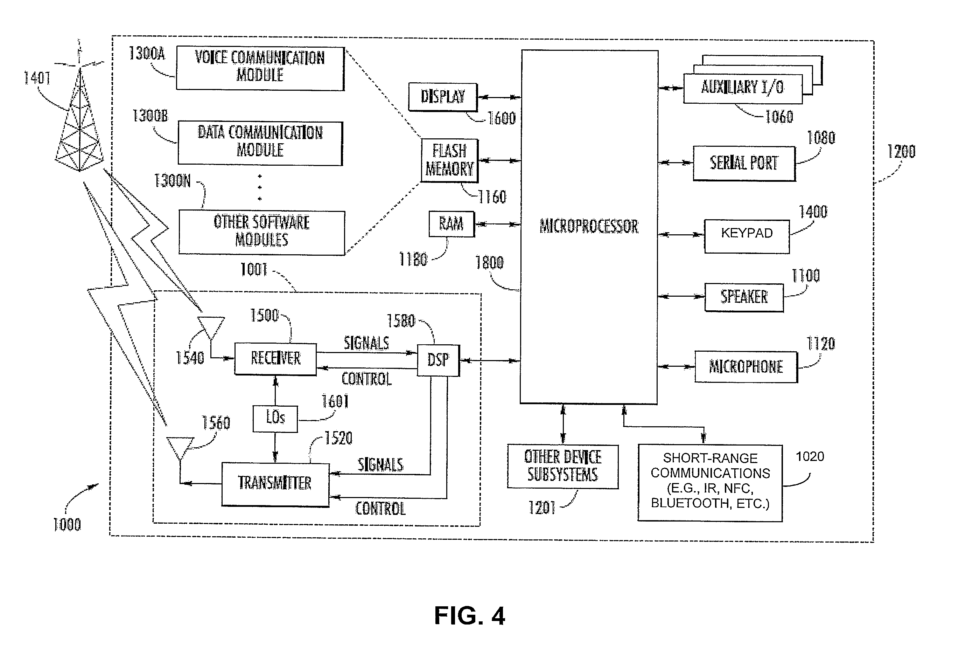

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth^{™} communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (10) comprising:
an antenna (12);
a plurality of Long Term Evolution (LTE) radio frequency (RF) differential inputs (18a-18f); and
a front end circuit (21-23) comprising
a plurality of band pass filters (24a-24b, 31a-31b, 44a-44b) coupled to said antenna,
a plurality of LNAs (25a-25b, 32a-32b, 43a-43b) coupled respectively to said plurality of band pass filters, and
a plurality of RF switching circuits (26a-26b, 33a-33b, 42a-42b), each RF switching circuit respectively coupled between each LNA and a pair of LTE RF differential inputs and configured to switch to one or both of said pair of LTE RF differential inputs.

2. The mobile wireless communications device of Claim 1 wherein said plurality of LTE RF differential inputs comprises:
a group of low band LTE RF differential inputs (18a-18b);
a group of mid band LTE RF differential inputs (18c-18d); and
a group of high band LTE RF differential inputs (18e-18f).

3. The mobile wireless communications device of Claim 1 further comprising a controller (17) configured to operate said plurality of RF switching circuits in a carrier aggregation mode.

4. The mobile wireless communications device of Claim 3 wherein said controller is configured to operate based upon a Mobile Industry Processor Interface (MIPI).

5. The mobile wireless communications device of Claim 1 wherein said front end circuit comprises a plurality of RF splitters (61-62) respectively coupled between said plurality of LNAs and said plurality of RF switching circuits.

6. The mobile wireless communications device of Claim 5 wherein each RF switching circuit comprises a pair of single-pole, double-throw switches (63a-64b) coupled to a respective one of said plurality of RF splitters.

7. The mobile wireless communications device of Claim 1 wherein said front end circuit comprises a plurality thereof including a low band front end circuit, a mid band front end circuit, and a high band front end circuit.

8. The mobile wireless communications device of Claim 1 wherein said front end circuit comprises a plurality of RF baluns (67-68) respectively coupled to said plurality of RF switching circuits.

9. The mobile wireless communications device of Claim 1 further comprising a housing (11) containing said antenna, said plurality of LTE RF differential inputs, and said front end circuit.

10. A method of making a mobile wireless communications device (10) comprising:
coupling a front end circuit (21-23) between a plurality of Long Term Evolution (LTE) radio frequency (RF) differential inputs (18a-18f) and an antenna (12), the front end circuit comprising
a plurality of band pass filters (24a-24b, 31a-31b, 44a-44b) coupled to the antenna,
a plurality of LNAs (25a-25b, 32a-32b, 43a-43b) coupled respectively to the plurality of band pass filters, and
a plurality of RF switching circuits (26a-26b, 33a-33b, 42a-42b), each RF switching circuit respectively coupled between each LNA and a pair of LTE RF differential inputs (18a-18b) and configured to switch to one or both of the pair of LTE RF differential inputs.

11. The method of Claim 10 wherein the plurality of LTE RF differential inputs comprises:
a group of low band LTE RF differential inputs (18a-18b);
a group of mid band LTE RF differential inputs(18e-18d); and
a group of high band LTE RF differential inputs (18e-18f).

12. The method of Claim 10 further comprising coupling a controller (17) to operate the plurality of RF switching circuits in a carrier aggregation mode.

13. The method of Claim 12 wherein the controller operates based upon a Mobile Industry Processor Interface (MIPI).

14. The method of Claim 10 wherein the front end circuit comprises a plurality of RF splitters (61-62) respectively coupled between the plurality of LNAs and the plurality of RF switching circuits.

15. The method of Claim 14 wherein each RF switching circuit comprises a pair of single-pole, double-throw switches (63a-64b) coupled to a respective one of the plurality of RF splitters.

## Patentansprüche

1. Eine mobile drahtlose Kommunikationsvorrichtung (10), umfassend:
eine Antenne (12);
eine Vielzahl von Long Term Evolution (LTE) Radiofrequenz-(RF)-Differenzeingängen (18a -18f); und
einen Frontend-Schaltkreises (21-23), umfassend:
eine Vielzahl von Bandpassfiltern (24a-24b, 31a-31b, 44a-44b), die mit der Antenne gekoppelt sind,
eine Vielzahl von LNAs (25a-25b, 32a-32b, 43a-43b), die jeweils mit der Vielzahl von Bandpassfiltern gekoppelt sind, und
eine Vielzahl von RF-Schaltkreisen (26a-26b, 33a-33b, 42a-42b), wobei jeder RF-Schaltkreis jeweils zwischen einem LNA und einem Paar von LTE RF-Differenzeingängen gekoppelt ist und konfiguriert ist, um zu einem oder beiden des Paars von LTE RF-Differenzgängen zu schalten.

2. Die mobile drahtlose Kommunikationsvorrichtung gemäß Anspruch 1, wobei die Vielzahl von LTE RF-Differenzeingängen umfasst:
eine Gruppe von Niederband LTE RF-Differenzeingängen (18a - 18b);
eine Gruppe von Mittelband LTE RF-Differenzeingängen (18c - 18d); und
eine Gruppe von Hochband LTE RF-Differenzeingängen (18e -18f).

3. Die mobile drahtlose Kommunikationsvorrichtung gemäß Anspruch 1, ferner umfassend eine Steuerung (17), die konfiguriert ist, um die Vielzahl von RF-Schaltkreisen in einem Trägeraggregationsmodus zu betreiben.

4. Die mobile drahtlose Kommunikationsvorrichtung gemäß Anspruch 3, wobei die Steuerung konfiguriert ist, um basierend auf einer mobilen Industrieprozessorschnittstelle (MIPI) zu arbeiten.

5. Die mobile drahtlose Kommunikationsvorrichtung gemäß Anspruch 1, wobei der Frontend-Schaltkreis eine Vielzahl von RF-Teilern (61-62) umfasst, die jeweils zwischen der Vielzahl von LNAs und der Vielzahl von RF-Schaltkreisen gekoppelt sind.

6. Die mobile drahtlose Kommunikationsvorrichtung gemäß Anspruch 5, wobei jeder RF-Schaltkreis ein Paar von einpoligen Wechselschaltern (63a-64b) umfasst, die mit einem jeweiligen aus der Vielzahl von RF-Teilern gekoppelt sind.

7. Die mobile drahtlose Kommunikationsvorrichtung gemäß Anspruch 1, wobei der Frontend-Schaltkreis eine Vielzahl davon mit einem Niederbandfrontend-Schaltkreis, einem Mittelbandfrontend-Schaltkreis und einem Hochbandfrontend-Schaltkreis umfasst.

8. Die mobile drahtlose Kommunikationsvorrichtung gemäß Anspruch 1, wobei der Frontend-Schaltkreis eine Vielzahl von RF-Symmetriergliedern (67-68) umfasst, die jeweils mit der Vielzahl von RF-Schaltkreisen gekoppelt sind.

9. Die mobile drahtlose Kommunikationsvorrichtung gemäß Anspruch 1, ferner umfassend ein Gehäuse (11) mit der Antenne, der Vielzahl von LTE RF-Differenzeingängen und dem Frontend-Schaltkreis.

10. Ein Verfahren zur Herstellung einer mobilen drahtlosen Kommunikationsvorrichtung (10), umfassend:
Koppeln eines Frontend-Schaltkreises (21-23) zwischen einer Vielzahl von Long Term Evolution (LTE) Radiofrequenz-(RF)-Differenzeingängen (18a - 18f) und einer Antenne (12), wobei der Frontend-Schaltkreis umfasst:
eine Vielzahl von Bandpassfiltern (24a - 24b, 31a - 31b, 44a - 44b), die mit der Antenne gekoppelt sind,
eine Vielzahl von LNAs (25a - 25b, 32a - 32b, 43a - 43b), die jeweils mit der Vielzahl von Bandpassfiltern verbunden sind, und
eine Vielzahl von RF-Schaltkreisen (26a - 26b, 33a - 33b, 42a - 42b), wobei jeder RF-Schaltkreis, jeweils zwischen einem LNA und einem Paar von LTE RF-Differenzeingängen (18a - 18b) gekoppelt ist und konfiguriert ist, um zu einem oder beiden des Paares von LTE RF-Differenzeingängen zu schalten.

11. Das Verfahren gemäß Anspruch 10, wobei die Vielzahl von LTE RF-Differenzeingängen umfasst:
eine Gruppe von Niederband LTE RF-Differenzeingängen (18a - 18b);
eine Gruppe von Mittelband LTE RF-Differenzeingängen (18e - 18d); und
eine Gruppe von Hochband LTE RF-Differenzeingängen (18e -18f).

12. Das Verfahren gemäß Anspruch 10, ferner umfassend ein Koppeln einer Steuerung (17), um die Vielzahl von RF-Schaltkreisen in einem Trägeraggregationsmodus zu betreiben.

13. Das Verfahren gemäß Anspruch 12, wobei die Steuerung basierend auf einer mobilen Industrieprozessorschnittstelle (MIPI) arbeitet.

14. Das Verfahren gemäß Anspruch 10, wobei der Frontend-Schaltkreis eine Vielzahl von RF-Teilern (61- 62) umfasst, die jeweils zwischen der Vielzahl von LNAs und der Vielzahl von RF-Schaltkreisen gekoppelt sind.

15. Das Verfahren gemäß Anspruch 14, wobei jeder RF-Schaltkreis ein Paar von einpoligen Wechselschaltern (63a - 64b) umfasst, die mit jeweils einem aus der Vielzahl von RF-Teilern gekoppelt sind.

## Revendications

1. Dispositif de communications sans fil mobile (10), comprenant :
une antenne (12) ;
une pluralité d'entrées différentielles à fréquence radio (RF) à évolution à long terme (LTE pour « Long Term Evolution ») (18a à 18f) ; et
un circuit de préamplificateurs d'ondes (21 à 23), comprenant :
une pluralité de filtres passe-bande (24a à 24b, 31a à 31b, 44a à 44b) couplés à ladite antenne,
une pluralité d'amplificateurs à bas bruit (25a à 25b, 32a à 32b, 43a à 43b) couplés respectivement à ladite pluralité de filtres passe-bande, et
une pluralité de circuit de commutation à fréquence radio (26a à 26b, 33a à 33b, 42a à 42b), chaque circuit de commutation à fréquence radio étant respectivement couplé entre chaque amplificateur à bas bruit et une paire d'entrées différentielles RF LTE et étant configuré de façon à effectuer une commutation vers l'une ou les deux de ladite paire d'entrées différentielles RF LTE.

2. Dispositif de communications sans fil mobile selon la revendication 1, dans lequel ladite pluralité d'entrées différentielles RF LTE comprend :
un groupe d'entrées différentielles RF LTE de bande basse (18a à 18b) ;
un groupe d'entrées différentielles RF LTE de bande moyenne (18c à 18d) ; et
un groupe d'entrées différentielles RF LTE de bande haute (18e à 18f).

3. Dispositif de communications sans fil mobile selon la revendication 1, comprenant de plus un dispositif de commande (17) configuré de façon à faire fonctionner ladite pluralité de circuits de commutation à fréquence radio dans un mode d'agrégation de porteuse.

4. Dispositif de communications sans fil mobile selon la revendication 3, dans lequel ledit dispositif de commande est configuré de façon à fonctionner selon une interface de processeur de l'industrie mobile (MIPI pour « Mobile Industry Processor Interface »).

5. Dispositif de communications sans fil mobile selon la revendication 1, dans lequel ledit circuit de préamplificateurs d'ondes comprend une pluralité de diviseurs à fréquence radio (61 à 62) respectivement couplés entre ladite pluralité d'amplificateurs à bas bruit et ladite pluralité de circuits de commutation à fréquence radio.

6. Dispositif de communications sans fil mobile selon la revendication 5, dans lequel chaque circuit de commutation à fréquence radio comprend une paire de commutateurs monopolaires à deux directions (63a à 64b) couplés à un diviseur respectif de ladite pluralité de diviseurs à fréquence radio.

7. Dispositif de communications sans fil mobile selon la revendication 1, dans lequel ledit circuit de préamplificateurs d'ondes comprend une pluralité de ceux-ci, comprenant un circuit de préamplificateur d'ondes de bande basse, un circuit de préamplificateur d'ondes de bande moyenne et un circuit de préamplificateur d'ondes de bande haute.

8. Dispositif de communications sans fil mobile selon la revendication 1, dans lequel ledit circuit de préamplificateurs d'ondes comprend une pluralité de symétriseurs à fréquence radio (67 à 68) respectivement couplées à ladite pluralité de circuits de commutation à fréquence radio.

9. Dispositif de communications sans fil mobile selon la revendication 1, comprenant de plus un boîtier (11) contenant ladite antenne, ladite pluralité d'entrées différentielles RF LTE et le ledit circuit de préamplificateurs d'ondes.

10. Procédé de réalisation d'un dispositif de communications sans fil mobile (10), comprenant :
le couplage d'un circuit de préamplificateurs d'ondes (21 à 23) entre une pluralité d'entrées différentielles à fréquence radio (FR) à évolution à long terme (LTE pour « Long Term Evolution ») (18a à 18f) et une antenne (12), le circuit de préamplificateurs d'ondes comprenant :
une pluralité de filtres passe-bande (24a à 24b, 31a à 31b, 44a à 44b) couplés à l'antenne,
une pluralité d'amplificateurs à bas bruit (25a à 25b, 32a à 32b, 43a à 43b) couplés respectivement à la pluralité de filtres passe-bande, et
une pluralité de circuits de commutation à fréquence radio (26a à 26b, 33a à 33b, 42a à 42b), chaque circuit de commutation à fréquence radio étant respectivement couplé entre chaque amplificateur à bas bruit et une paire d'entrées différentielles RF LTE (18a à 18b) et étant configuré de façon à effectuer une commutation vers l'une ou vers les deux de la paire d'entrées différentielles RF LTE.

11. Procédé selon la revendication 10, dans lequel la pluralité d'entrées différentielles RF LTE comprend :
un groupe d'entrées différentielles RF LTE de bande basse (18a à 18b) ;
un groupe d'entrées différentielles RF LTE de bande moyenne (18e à 18d) ; et
un groupe d'entrées différentielles RF LTE de bande haute (18e à 18f).

12. Procédé selon la revendication 10, comprenant de plus le couplage d'un dispositif de commande (17) de façon à faire fonctionner la pluralité de circuits de commutation à fréquence radio dans un mode d'agrégation de porteuse.

13. Procédé selon la revendication 12, dans lequel le dispositif de commande fonctionne selon une interface de processeur de l'industrie mobile (MIPI pour « Mobile Industry Processor Interface »).

14. Procédé selon la revendication 10, dans lequel le circuit de préamplificateurs d'ondes comprend une pluralité de diviseurs à fréquence radio (61 à 62) respectivement couplés entre la pluralité d'amplificateurs à bas bruit et la pluralité de circuit de commutation à fréquence radio.

15. Procédé selon la revendication 14, dans lequel chaque circuit de commutation à fréquence radio comprend une paire de commutateurs monopolaires à deux directions (63a à 64b) couplés à un diviseur respectif de la pluralité de diviseurs à fréquence radio.
